# EUROPÄISCHE PATENTSCHRIFT

(11) **EP 1 032 471 B1**
(45) Veröffentlichungstag und Bekanntmachung des Hinweises auf die Patenterteilung: **24.04.2002**
(21) Anmeldenummer: 98963483.7
(22) Anmeldetag: 19.11.1998
(51) Int. Cl.: B01L 3/02, B01L 11/00

(54) **VORRICHTUNG ZUR SEQUENTIELLEN AUSGABE VON FLIESSFÄHIGEN REAGENZIEN**
DEVICE FOR SEQUENTIAL DISCHARGE OF FLOWABLE REAGENTS
DISPOSITIF DE DISTRIBUTION SEQUENTIELLE DE REACTIFS COULANTS

(30) Priorität: 19.11.1997 DE 19751327; 06.06.1998 DE 19825362
(43) Veröffentlichungstag der Anmeldung: 06.09.2000
(73) Patentinhaber: Biognosis GmbH, 52428 Jülich (DE)
(72) Erfinder: Miethe, Peter, 06632 Schleberoda (DE); Plaksine, Dimitri, 52428 Jülich (DE); Gromakovskaja, Elena, 52428 Jülich (DE)
(74) Vertreter: Hilleringmann, Jochen, Dipl.-Ing.
(86) Internationale Anmeldenummer: EP9807413
(87) Internationale Veröffentlichungsnummer: WO9925475

(56) Entgegenhaltungen:
- WO-A-97/18895
- FR-A- 2 663 304
- US-A- 3 070 094
- US-A- 3 713 780
- US-A- 4 585 623
- US-A- 4 689 204
- US-A- 5 312 757

## Beschreibung

Die Erfindung betrifft eine Vorrichtung, mit der es möglich ist mehrere, für eine gegebene chemische oder biochemische Synthese- oder Nachweisreaktion benötigte, flüssige oder halbflüssige (fließfähige) Reagenzien in integrierter Form, d. h. in einem einzigen leicht herstellbaren und handhabbaren Aufnahmebehälter zu lagern und mit der im Anwendungsfalle durch eine einfache Linearbewegung eines Stempels ein exaktes Dosieren dieser Reagenzien in einen Reaktionsraum ohne vorherige Vermischung realisiert werden kann.

Die integrierte Lagerung und definierte Dosierung von mehreren flüssigen oder halbflüssigen Reagenzien ist von großer Bedeutung für die Herstellung von anwendungsbereiten chemischen und pharmazeutischen Produkten, die einerseits chemisch komplex sind d. h. bei denen in einer zeitlich definierten Abfolge verschiedene z. T. sehr unterschiedliche und miteinander reagierende Reagenzien in einen Reaktionsraum dosiert werden müssen, die aber andererseits einfach herstellbar und für den Anwender bedienbar sein müssen. Eine ausreichend einfache Bedienbarkeit ist insbesondere dann gegeben, wenn der Anwender durch nur wenige unverwechselbare Handgriffe die Dosierung auslösen kann.

Wichtige Anwendungsfelder liegen im Bereich der chemischen und biochemischen Schnellanalytik sowie im Bereich Wirkstoffformulierung für pharmazeutische Anwendungen. Von besonderer kommerzieller Bedeutung ist der Bereich der klinischen Schnellanalytik. Hier werden reproduzierbar und gegebenenfalls quantitativ arbeitende einfache integrierte Systeme benötigt, die im dezentralen Einsatz (Arztpraxen, Apotheken, Haushalt) auch von einem ungeübten Anwender bedient werden können. Ein typischer Forderungskatalog bezüglich Handhabbarkeit und Verläßlichkeit wurde in den USA in Form der Richtlinien zum CLIA (clinical laboratory improvement act) formuliert.

Ein heute in der Schnellanalytik eingesetzte Vorrichtung zur Lagerung und Dosierung von maximal drei unterschiedlichen Reagenzien ist in US -A- 4,943,522 beschrieben. Dabei wird eine biochemisch aktive Komponente auf ein streifenförmiges Glasvlies gebracht und darauf getrocknet. In dieser trockenen Form kann es über einen längeren Zeitraum gelagert werden. Das Glasvlies wird über einen Nitrozellulosestreifen angeordnet. Im Anwendungsfall wird durch Aufgabe einer flüssigen Probe, die durch Kapillarkräfte durch das Glasvlies wandert, die dort befindlichen Reagenzien gelöst und eine Teilreaktion gestartet. Das Reaktionsgemisch wandert dann weiter in die Nitrozellulosemembran, wo eine zweite und gegebenenfalls dritte Reaktivkomponente immobilisiert vorliegt, die mit der Probe weiter reagiert. Das Verfahren ist für komplexe Reaktionen, die mehr als drei Reagenzien erfordern, praktisch nicht anwendbar, da es in der Regel zu schwer kontrollierbaren Vermischungs- oder/und Vernetzungsreaktionen der Komponenten kommt. Zwischenwaschschritte zur Vermeidung dieser Effekte sind nicht möglich. Die Vorrichtung erlaubt insbesondere auch keine sehr gute quantitative Auswertung, da die zugrundeliegenden physikochemischen Schritte wie Trocknung, Rekonstitution und laterale Diffusion sehr störanfällig und ohne großen technischen Aufwand nicht gut reproduzierbar sind. Dem Einsatz von Flüssigreagenzien wird daher oft der Vorzug gegeben. Eine Entsprechende Vorrichtung zur Lagerung und Dosierung wird in der WO-A-97/18895 beschrieben. Sie basiert auf dem Einsatz von mindestens zwei die Reagenzien enthaltenden starren Vorratsbehältern/Containern. Die Container sind dabei hintereinander angeordnet und am Boden jeweils mit einer Absperrvorichtung, die über eine Auslöseeinheit geöffnet werden kann verschlossen. Im Anwendungsfall fließen die Reagenzien aufgrund der Gravitation durch die geöffneten Böden jeweils in den darunterliegenden Container und nach Passieren des letzten Containers aus der Vorrichtung in den Reaktionsraum. Der Dosiervorgang kann prinzipiell auf zwei Arten realisiert werden. Entweder die Absperrvorrichtung der einzelnen Container beginnend von dem der Auslaßöffnung zum Reaktionsraum am nächstliegenden Container werden nacheinander geöffnet, wobei die Öffnung des höherliegenden Containers erst erfolgt, wenn der darunterliegende entleert ist oder die Öffnung aller Container erfolgt gleichzeitig, wobei es zu einem Einfließen der Flüssigkeiten aus einem höherliegenden in einen noch nicht entleerten darunterliegenden Container kommt. Im ersten Falle ist ein mehrfaches Auslösen des Dosiervorganges notwendig. Dies ist für den Anwender aufwendig und für viele Anwendungen nicht akzeptabel. Im zweiten Falle sind partielle Vermischungen nicht ausgeschlossen. Dies führt in der Regel zu unkontrollierbaren Vorreaktionen oder Verdünnungen. In der Anmeldung wird vorgeschlagen, diese Effekte durch nicht störende Zusätze die Dichte und Viskosität der Flüssigkeiten verändern, zu minimieren. Dies schließt aber in keinem Falle Reaktionen an Phasengrenzen und Vermischungen durch Mikroturbulenzen aus.

Ein weiterer Nachteil der Vorrichtung ist die Kontrolle des Dosiervorganges durch Gravitation in Kombination mit den Strömungswiderständen der Auftragsvorrichtung und u. U̇. des angeschlossenen Reaktionsraumes. Da die Strömungswiderstände im Inneren der Container sehr stark von den Grenzflächenspannungen der Flüssigkeiten abhängen, können geringe Zusätze von z. B. oberflächenaktiven Substanzen das Flußverhalten sehr stark verändern. Bei Anwendungen, bei denen aus reaktionskinetischen Gründen ein reproduzierbares Ausflußverhalten der Reagenzien notwendig ist, führt dies zu sehr starken Schwankungen im Reaktionsverlauf.

Der Erfindung liegt die Aufgabe zugrunde, eine Vorrichtung bereitzustellen, aus der auf einfache Weise wenigstens zwei flüssige oder halbflüssige Reagenzien durch eine einzige mechanische Linearbewegung genau, zeitlich definiert und sequentiell in einen Reaktionsraum ohne Vermischung der Reagenzien ausgegeben werden können.

Zur Lösung dieser Aufgabe wird mit der Erfindung eine Vorrichtung zur sequentiellen Ausgabe von fließfähigen Reagenzien vorgeschlagen, die die im Anspruch 1 aufgeführten Merkmale und Eigenschaften aufweist.

Erfindungsgemäß wird also eine Vorrichtung eingesetzt, bei der die einzelnen Reagenzien hintereinanderliegend in Form einer Reagenziensäule angeordnet sind, wobei die einzelnen Reagenzien durch bewegliche, an der Innenfläche eines zylinderförmigen die Reagenziensäule enthaltenden Container dichtend und gleitfähig gelagerte Trennwände, segregiert werden.

Für die Dosierung wird die segregierte Reagenziensäule in Richtung auf eine Austrittsöffnung und durch diese hindurchgeschoben wobei die Reagenzien entsprechend den Container verlassen und die Trennwände in einen Bereich des Containers geschoben werden, der sich unterhalb der Einlaßöffnung des Auslaßkanals befindet. Dabei wird das Medium, das sich in diesem Bereich des Containers befindet über einen Druckausgleichskanal entweder in die Umwelt oder in den Reaktionsraum gedrückt. Im ersten Falle ist der Druckausgleichskanal zur Umwelt hin geöffnet und bei dem Medium handelt es sich um Luft. Im zweiten Falle ist der Druckausgleichskanal zum Reaktionsraum hin geöffnet und das Medium ist eine zu dosierende Flüssigkeit z. B. eine Waschlösung.

In die Vorrichtung ist weiterhin eine Haltekraft-Erzeugungseinheit integriert, die zusammen mit der in Abgaberichtung an erster Stelle liegenden unteren Trennwand einen der Linearbewegung entgegenwirkenden Druck erzeugt, der höher ist als der von der druckerzeugenden Einheit erzeugte. Hier ist es beispielsweise möglich zwischen Boden des Aufnahmebehälters und der ersten Trennwand eine Feder einzubauen. Eine besonders einfache Lösung ist die Verwendung einer ersten Trennwand, die aufgrund eines leicht größeren Außendurchmessers eine höhere Reibung aufweist als die nachfolgenden Trennwände. Einen analogen Effekt kann man erreichen, wenn der Aufnahmeraumbereich unterhalb der Eintrittsöffnung des Auslaßkanals einen etwas, beispielsweise 1 - 10 % kleineren Innendurchmesser aufweist als der darüberliegende Bereich des Aufnahmeraums oder durch spezielle Oberflächenbehandlung eine höhere Reibung aufweist.

In vorteilhafter Weiterbildung der Erfindung ist vorgesehen, daß die druckerzeugende Einheit als Kolben bzw. Stempel ausgebildet ist, der in dem Aufnahmebehältnis dichtend an diesem anliegt und in Richtung auf das erste Ende des Aufnahmeraums gleitend verschiebbar ist. Da das in der Reagenziensäule zu oberst angeordnete Reagenzienvolumen im Regelfall durch ein Trennelement abgedichtet ist, fungiert dieses Trennelement als Kolben, auf den dann ein Stempel der druckerzeugenden Vorrichtung einwirkt. Die druckerzeugende Vorrichtung kann aber auch als pneumatische Druckerzeugungseinheit ausgebildet sein, die pneumatisch auf das oberste Trennelement einwirkt. Auch hydraulische Systeme sind als Druckerzeugungseinheit denkbar.

Zweckmäßigerweise schließt sich an die Auslaßöffnung ein Auslaßkanal an, der insbesondere bis über das erste Ende des Aufnahmebehältnisses hinaus sich erstreckt. Dieser Auslaßkanal ist entweder außerhalb oder innerhalb des Aufnahmeraums angeordnet. Sofern er innerhalb angeordnet ist, ist er als Auslaßröhrchen ausgebildet, dessen im Innern des Aufnahmeraums angeordnetes Ende die Trennelemente durchstechen kann, wenn diese in Folge des Drucks der druckerzeugenden Einheit sich in Richtung auf das erste Ende des Aufnahmebehältnisses bewegen. Das Auslaßröhrchen ist dabei entgegengesetzt zu dieser Bewegungsrichtung ausgerichtet.

Sofern sich in dem Bereich des Aufnahmeraums zwischen der Auslaßöffnung und der Entlastungsöffnung lediglich Luft bzw. ein Gas befindet, ist es zweckmäßig, wenn die Entlastungsöffnung in die Umgebung um das Aufnahmebehältnis führt. Es ist aber auch möglich, daß sich in diesem Bereich des Aufnahmeraums ein Reagenz befindet. Dann ist es zweckmäßig, wenn die Entlastungsöffnung fluidmäßig mit der Auslaßöffnung verbunden ist, indem beispielsweise die Entlastungsöffnung in den Auslaßkanal einmündet.

Bei der Haltekraft-Erzeugungsvorrichtung handelt es sich insbesondere um eine die Reibung zwischen dem untersten der Trennelemente und dem Bereich des Aufnahmeraums unterhalb der Auslaßöffnung erhöhende Einheit. Durch die damit erzielte Haftreibungserhöhung wird sichergestellt, daß zumindest das unterste Trennelement dann, wenn es in den Bereich des Aufnahmeraums unterhalb der Auslaßöffnung gelangt, nicht mehr weiterbewegt wird, so daß dann der von der druckerzeugenden Einheit aufgebaute Druck dazu eingesetzt wird, daß sich oberhalb des untersten Trennelements befindliche Reagenz über die Auslaßöffnung auszugeben. Sobald dann das nächste Trennelement in den Bereich der Auslaßöffnung gelangt und diese schließt, werden in Folge des Drucks der druckerzeugenden Vorrichtung nun die beiden übereinanderliegenden Trennelemente in Richtung auf das erste Ende des Aufnahmeraums bewegt, bis das obere dieser beiden Trennelemente unterhalb der Auslaßöffnung angeordnet ist. Jetzt kann wieder das Reagenz des über diesem Trennelement befindlichen Volumen über die Auslaßöffnung abfließen. Dieser Prozeß wiederholt sich entsprechend der Anzahl an Trennelementen und Reagenzienvolumina.

Eine erhöhte Reibung im Bereich unterhalb der Auslaßöffnung des Aufnahmeraums kann beispielsweise durch entsprechende Behandlung der einander kontaktieren Oberflächen des untersten Trennelements und der Innenseite des Aufnahmeraums realisiert werden. Ferner ist es denkbar, daß der Aufnahmeraum in seinem Bereich unterhalb der Auslaßöffnung verengt ist oder daß das unterste Trennelement gegenüber den anderen Trennelementen ein Übermaß aufweist, also breiter ist als die übrigen Trennelemente. Schließlich ist es auch denkbar, eine Feder als Haltekraft-Erzeugungseinheit einzusetzen, deren Federkraft dann entgegengesetzt zur Richtung der Trennelemente wirkt, entlang derer diese sich in Folge der Einwirkung der druckerzeugenden Einheit bewegen.

Eine zweite Variante der Erfindung schlägt eine Vorrichtung zur sequentiellen Ausgabe von fließfähigen Reagenzien vor, die versehen ist mit den Merkmalen und Eigenschaften des Anspruchs 11.

Bei dieser Variante der Erfindung werden anstelle von Trennwänden Gas- oder Flüssigkeitsvolumina eingesetzt. Diese Gase bzw. Flüssigkeiten sind inert und im wesentlichen nicht vermischbar mit den Reagenzien. Die Flüssigkeiten sind hydrophob. In der Auslaßöffnung befindet sich eine hydrophile Membran, die lediglich die Reagenzien und nicht die hydrophoben Trennflüssigkeiten bzw. die gasförmigen Trennvolumina durchläßt. Im Ausgangszustand der Vorrichtung gemäß dieser Variante befindet sich im Bereich der Auslaßvorrichtung ein diese von innen verschließendes Verschlußelement. Die Verwendung von Flüssigkeits- bzw. Gasvolumina zur Trennung setzt voraus, daß das Aufnahmebehältnis als Kapillare ausgebildet ist. Diese Kapillare ist an ihren beiden einander gegenüberliegenden Enden offen und weist einen Abzweig auf, der sich an die Auslaßöffnung anschließt.

Unterhalb der Auslaßöffnung zwischen dieser und dem unteren ersten Ende der Kapillare befindet sich wiederum die bereits oben im Zusammenhang mit den Trennelementen der ersten erfindungsgemäßen Variante diskutierte Haltekraft-Erzeugungsvorrichtung, die anstelle mit den Trennelementen nun mit dem Verschlußelement zusammenwirkt. Von daher gelten sämtliche oben genannten Ausführungen zur Haltekraft-Erzeugungsvorrichtung auf die zweite Variante der Erfindung entsprechend.

Nachfolgend werden anhand der Figuren Ausführungsbeispiele der Erfindung näher erläutert. Im einzelnen zeigen:
- Fign. 1 bis 5: die unterschiedlichen Betriebszustände einer Ausgabevorrichtung gemäß einem ersten Ausführungsbeispiel,
- Fign. 6 bis 9: die unterschiedlichen Betriebszustände einer Ausgabevorrichtung gemäß einem zweiten Ausführungsbeispiel,
- Fig. 10: eine Darstellung eines dritten Ausführungs-beispiels der Ausgabevorrichtung und
- Fign. 11 und 12: unterschiedliche Betriebsstellungen eines weiteren Ausführungsbeispiels einer Ausgabevorrichtung.

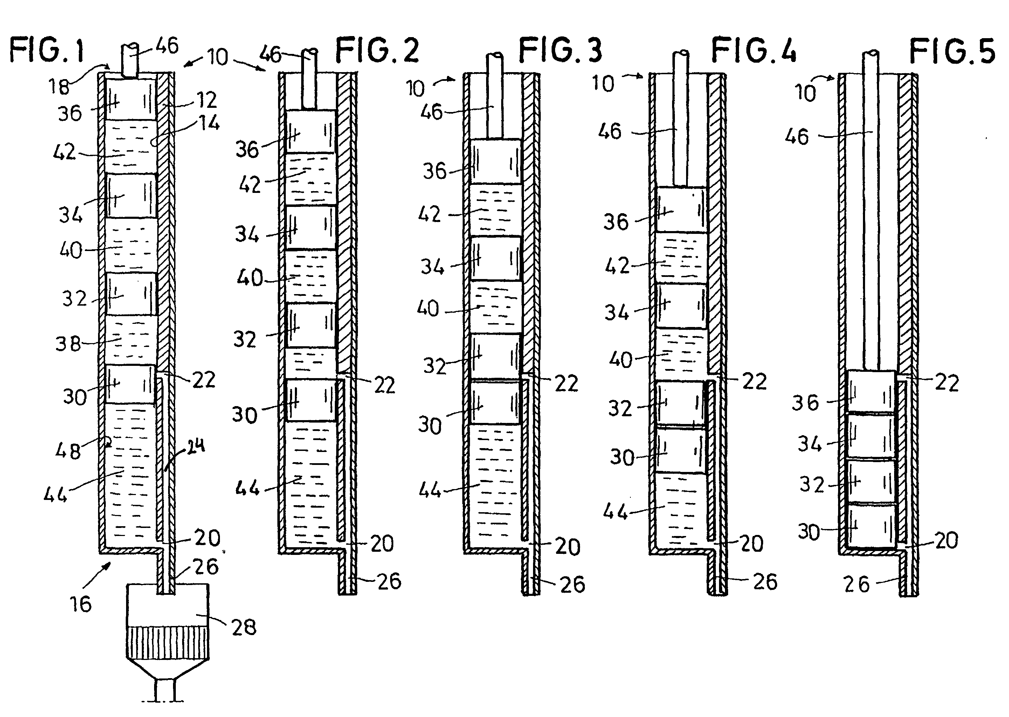

In den Fign. 1 bis 5 ist ein erstes Ausführungsbeispiel einer Ausgabevorrichtung 10 gezeigt. Die Ausgabevorrichtung 10 weist ein im wesentlichen rohrförmiges Aufnahmebehältnis 12 auf. In dem Aufnahmebehältnis 12 ist ein im wesentlichen zylindrischer Aufnahmeraum 14 ausgebildet, der ein unteres erstes Ende 16 und ein oberes zweites Ende 18 aufweist. Am unteren Ende 16 befindet sich eine radial ausgerichtete Entlastungsöffnung 20. Oberhalb dieser Entlastungsöffnung 20 ist in die Seitenwand des Aufnahmebehältnisses 12 eine Auslaßöffnung 22 eingebracht. Die beiden Öffnungen stehen über einen Auslaßkanal 24 in Verbindung. Dieser Auslaßkanal 24 endet in einem Auslaßstutzen 26, der oberhalb eines bei 28 dargestellten Reaktionsraums endet.

Innerhalb des Aufnahmeraums 14 befinden sich in diesem Fall vier aus Elastomermaterial bestehende kolbenartige Trennelemente 30,32,34,36, die voneinander beabstandet angeordnet sind. Zwischen benachbarten Trennelementen befinden sich Reagenzienvolumina 38,40,42. Desweiteren befindet sich ein Reagenz auch in dem Bereich zwischen dem unteren ersten Ende 16 des Aufnahmeraums und dem untersten der Trennelemente 30. Dieses Reagenzienvolumen ist in den Fign. 1 bis 5 bei 44 angedeutet.

Im Ausgangszustand der Vorrichtung 10 gemäß Fig. 1 befindet sich das unterste 30 der Trennelemente in Höhe der Auslaßöffnung 22, die von diesem Trennelement 30 verschlossen wird. Oberhalb des Trennelements 30 befindet sich die Reagenziensäule mit dazwischenliegenden Trennelementen 32,34,36. Wie bei 46 angedeutet, wirkt auf das oberste Trennelement 36 eine druckerzeugende Einheit in Form eines abwärts bewegbaren Stempels ein. Wird dieser Stempel, der sich am oberen zweiten Ende 18 des Aufnahmeraums 14 befindet, in Richtung auf das erste untere Ende 16 des Aufnahmeraums 14 bewegt, so werden die vier Trennelemente 30-36 entsprechend nach unten bewegt. Dabei tritt aus dem Reagenzienvolumen 44 über die Entlastungsöffnung 20 und den Auslaßstutzen 26 Flüssigkeit aus. Dieser Prozeß hält so lange an, bis das unterste Trennelement 30 die in Fig. 2 gezeigte Position unmittelbar unterhalb der Auslaßöffnung 22 erreicht hat. Damit liegt nun die Auslaßöffnung 22 frei, so daß aus dem Volumen 38 Reagenz über die Auslaßöffnung 22 und den Auslaßkanal 24 austreten kann. Das unterste Trennelement 30 wird in seiner Position unmittelbar unterhalb der Auslaßöffnung 22 gehalten, und zwar unter Einwirkung einer Haltekraft-Erzeugungsvorrichtung 48, die in einer Verengung des Aufnahmeraumbereichs zwischen der Auslaßöffnung 22 und dem unteren ersten Ende 16 besteht. Diese Verengung kann beispielsweise durch (nicht dargestellt) leicht vorstehende Rippen realisiert werden. Alternativ dazu ist es möglich, daß das unterste Trennelement 30 ein Übermaß aufweist. In jedem Fall soll erreicht werden, daß das unterste Trennelement 30 dann, wenn es an der Auslaßöffnung 22 vorbeibewegt worden ist, in Folge des durch die Druckerzeugungsvorrichtung 46 aufgebauten statischen Flüssigkeitsdrucks nicht weiter in Richtung auf das untere Ende 16 bewegt wird, so daß Reagenzflüssigkeit über die Auslaßöffnung 22 austreten kann.

Dieser Vorgang hält so lange an, bis das zweite Trennelement 32 die Auslaßöffnung 22 verschließt und dann gemäß der Darstellung von Fig. 3 das unterste Trennelement 30 kontaktiert. Nun wiederum werden diese beiden Trennelemente 30,32 in Richtung auf das erste Ende 16 gemeinsam vorbewegt, bis das Trennelement 32 sich vollständig an der Auslaßöffnung 22 vorbeibewegt und diese frei gegeben hat (siehe Fig. 4). Jetzt kann Reagenz aus dem Volumen 40 austreten. Der zuvor beschriebene Prozeß wiederholt sich entsprechend der Anzahl an Reagenzienvolumina bzw. Trennelementen. Im Endzustand stellt sich dann beispielsweise die Situation gemäß Fig. 5 ein.

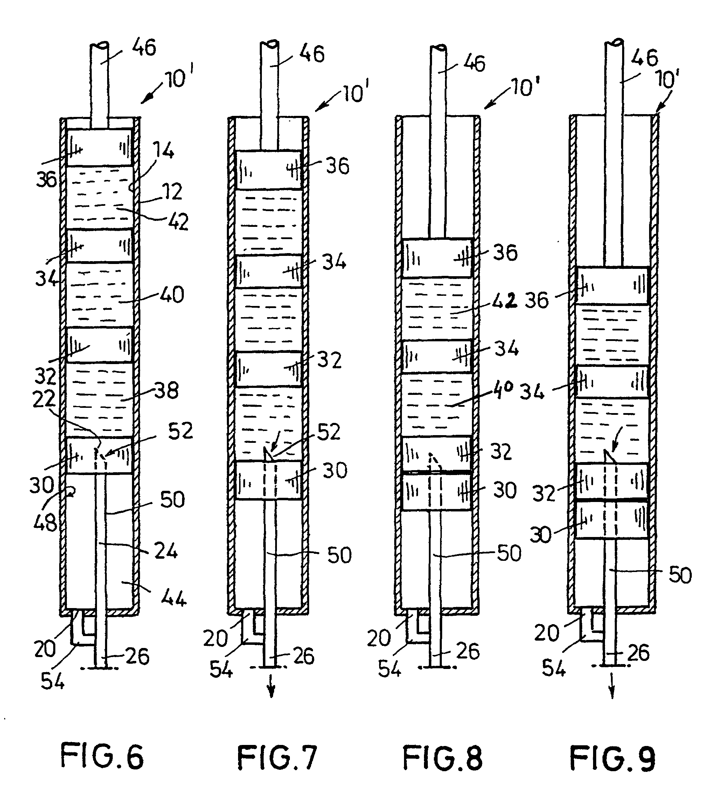

Ein zweites Ausführungsbeispiel einer Vorrichtung 10' wird nachfolgend anhand der Fign. 6 bis 9 erläutert. Soweit die einzelnen Teile der Vorrichtung 10' denjenigen der Vorrichtung 10 entsprechen, sind sie mit den gleichen Bezugszeichen versehen.

Wie im Falle des Ausführungsbeispiels gemäß den Fign. 1 bis 5, ist auch das Aufnahmebehältnis 12 der Vorrichtung 10' mit einer , Reagenziensäule bestehend aus den Reagenzienvolumina 38-44 und den diese trennenden beweglichen Trennelementen 30-36 gefüllt. Der Auslaßkanal 24 ist in Form eines starren Röhrchens 50 ausgebildet, das ein im Aufnahmeraum 14 angeordnetes erstes Ende 52 aufweist und sich bis zu seinem den Auslaßstutzen 26 bildenden anderen Ende außerhalb des Aufnahmebehältnisses 12 erstreckt. Über eine Verbindungsleitung 54 ist die Entlastungsöffnung 20 mit dem Röhrchen 50 verbunden. Die einzelnen Trennelement 30-36 sind von dem Röhrchen 50 penetrierbar.

Im Lagerzustand ist die von dem Ende 52 des Röhrchens 50 gebildete Auslaßöffnung 22 durch das unterste Trennelement 30 verschlossen und blockiert. In diesem Zustand können die Reagenzien ohne gegenseitige Durchmischung oder Auslaufen gelagert werden. Im Anwendungsfall wird über den Stempel 46 eine Kraft auf das oberste Trennelement 36 aufgebracht, so daß sich die Reagenziensäule in Richtung der Entlastungsöffnung 20 bewegt. Dabei wird das unterste Trennelement 30 auf das Röhrchen 50 "aufgespießt", bis sich das untere Trennelement 30 an dem vorderen Ende 52 des Auslaßröhrchens 50 vorbeibewegt hat und damit die Auslaßöffnung 22 frei gibt. Nun kann Reagenz aus dem Volumen 38 über den Auslaßkanal 24 abfließen und damit ausgegeben werden (siehe Fig. 7). Dieser Prozeß hält an, bis das nächste Trennelement 32 in Kontakt mit dem vorderen Ende 52 des Auslaßröhrchens 50 gelangt und damit wiederum die Auslaßöffnung 22 verschließt (siehe Fig. 8). Beide unteren Trennelemente 30,32, die sich nun berühren, werden bei weiterem Niederdrücken des Kolbens 46 gemeinsam nach unten bewegt, bis sich die Situation gemäß Fig. 9 einstellt, in der sich das obere Trennelement 32 an dem Ende 52 des Auslaßröhrchens 50 vorbeibewegt hat, so daß nun Reagenz aus dem Volumen 40 über das Auslaßröhren 50 abgegeben wird. Mit jedem Niederdrücken des. untersten Trennelements 30 tritt über die Entlastungsöffnung 20 Reagenz aus dem Volumen 44 aus. Insoweit ist also die Vorrichtung 10' funktionsgleich mit der Vorrichtung 10, wobei lediglich der Abdichtmechanismus und Freigabemechnismus für die Auslaßöffnung 22 unterschiedlich ist.

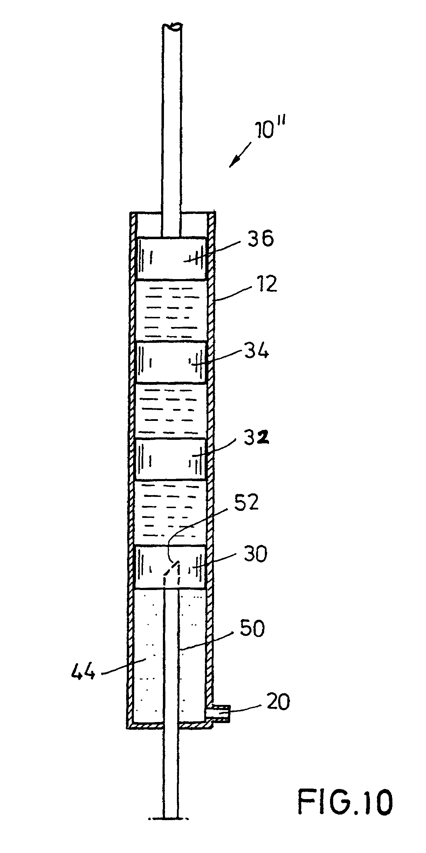

Fig. 10 zeigt ein drittes Ausführungsbeispiel einer Vorrichtung 10'' zur sequentiellen Abgabe von fließfähigen Reagenzien. Dieses Ausführungsbeispiel ist nahezu identisch mit demjenigen der Fign. 6 bis 9. Der einzige Unterschied besteht darin, daß die Entlastungsöffnung 20 nicht mit dem Auslaßröhrchen 50 verbunden ist, sondern in der Umgebung um das Behältnis 12 endet. In dem Volumen 44 befindet sich nun ein Gas (Luft), das an die Umgebung abgegeben wird, wenn die Trennelemente 30-36 in den Bereich unterhalb des Endes 52 des Auslaßröhrchen 50 geschoben werden.

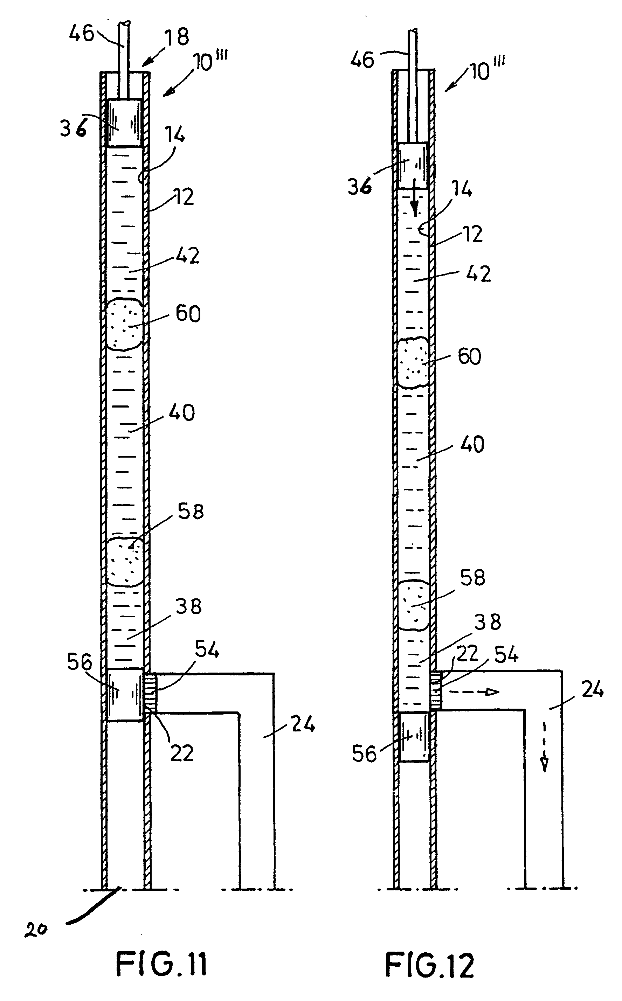

In den Fign. 11 bis 12 ist ein viertes Ausführungsbeispiel einer Vorrichtung 10''' zur sequentiellen Ausgabe von fließfähigen Reagenzien gezeigt. Hier besteht das Aufnahmebehältnis 12 aus einer Kapillare, deren Lumen den Aufnahmeraum 14 bildet. Die Kapillare ist an ihren oberen und unteren Enden 16,18 offen. Das untere Ende stellt eine Entlastungsöffnung 20 dar.

Oberhalb des unteren Endes 18 befindet sich in der Wandung der Kapillare eine radiale Auslaßöffnung 22, die von einer hydrophilen Membran 54 ausgefüllt ist. An die Auslaßöffnung 22 schließt sich der Auslaßkanal 24 an. Innerhalb der Kapillaren 12 befindet sich Ausgangszustand der Vorrichtung 10''' ein Verschlußelement 56, das die Auslaßöffnung 22 und die hydrophile Membran 54 von innen überdeckt und damit verschließt. Oberhalb des Verschlußelements 56 befinden sich die Reagenzienvolumina 38,40,42, die durch Gasblasen oder durch Volumina von hydrophoben Flüssigkeiten 58,60 getrennt sind. Mittels eines dem Trennelement 36 der vorherigen Ausführungsbeispiele entsprechenden Kolbens 36 kann von oben auf die Reagenziensäule mit Hilfe des Stempels 46 hydrostatischer Druck aufgebracht werden. In Folge dieses Drucks bewegt sich die gesamte Reagenziensäule zusammen mit dem Verschlußelement 56 in Richtung des unteren Endes 16 der Kapillare 12. Die Abwärtsbewegung des Verschlußelements 56 hält so lange an, bis die Auslaßöffnung 22 weit genug geöffnet ist, damit nun durch die Membran 54 hindurch Reagenz aus dem oberhalb des Verschlußelements angeordneten Volumen 38 über den Auslaßkanal 24 abfließen kann. Da die Membran 54 hydrophil ist, läßt sie das Reagenz des Volumens 38 durch. Nachdem sämtliches Reagenz aus diesem Volumen 38 abgeflossen ist, erreicht die unterste der Gas- bzw. Flüssigkeitsvolumina 58 den Bereich der Öffnung 22 und damit der Membran 54. Da das Volumen 58 hydrophob ist, wird es von der Membran 54 nicht durchgelassen. Als Folge davon wandert das Volumen 58 an der Öffnung 22 und der Membran 54 innerhalb der Kapillaren 12 weiter in Richtung auf das untere Ende 16, und zwar gemeinsam mit dem Verschlußelement 56. Im Anschluß daran, nämlich nach Freigabe der Membran 54 wird diese von dem Reagenz des nächsten Reagenzienvolumens 40 kontaktiert, wobei die Membran 54 wegen ihrer hydrophilen Eigenschaften dieses Reagenz wiederum durchläßt. Auf die zuvor beschriebene Weise können also mit der Vorrichtung 10''' die Reagenzien sequentiell und unvermischt dosiert abgegeben werden.

## Patentansprüche

1. Vorrichtung (10) zur sequentiellen Ausgabe von fließfähigen Reagenzien, mit
- einem Aufnahmebehältnis (12), das einen Aufnahmeraum (14) mit zwei einander gegenüberliegenden Enden aufweist, wobei das Aufnahmebehältnis (12) an dem ersten Ende (16) des Aufnahmeraums eine Entlastungsöffnung (20) aufweist,
- einer druckerzeugenden Einheit (46), die am Aufnahmebehältnis (12) am zweiten Ende (18) des Aufnahmeraums (14) positionierbar oder angeordnet ist und mit der im Aufnahmeraum (14) ein Druck aufbaubar ist,
- einer von dem Aufnahmeraum (14) aufgenommenen Reagenziensäule, die mindestens zwei durch jeweils ein Trennelement (30, 32, 34, 36) getrennte Reagenzienvolumina (38, 40, 42, 44) aufweist, wobei jedes Trennelement (30, 32, 34, 36) im Aufnahmebehältnis (12) dichtend anliegt und in den Aufnahmeraum (14) in Richtung auf dessen erstes Ende (16) gleitend verschiebbar ist,
- einer Auslaßöffnung (22), die an einer Abzweigstelle zwischen dem ersten (16) und dem zweiten Ende (18) des Aufnahmeraums (14) angeordnet ist, wobei der Abstand zwischen der Auslaßöffnung (22) und der Entlastungsöffnung (20) des Aufnahmeraums (14) mindestens so groß ist wie die Dicke des ersten zwischen der Auslaßöffnung (22) und dem zweiten Ende (18) des Aufnahmeraums angeordneten Trennelement (32),
- einer im Bereich zwischen der Auslaßöffnung (22) und der Entlastungsöffnung (20) in dem Aufnahmeraum (14) angeordneten Haltekraft-Erzeugungseinheit (48) zur Erzeugung einer zumindest auf die unterste der in diesem Bereich des Aufnahmeraums (14) angeordneten Trennelemente (30) wirkenden Haltekraft, die so groß ist, daß sich in diesem Bereich ein großer Strömungswiderstand für die Reagenzien einstellt als über die Auslaßöffnung (22) derjenige, der sich ergibt wenn die Reagenzien über die Auslaßöffnung (22) abfließen.

2. Vorrichtung nach Anspruch 1, **dadurch gekennzeichnet, daß** die druckerzeugende Einheit (46) einen Kolben aufweist, der in dem Aufnahmebehältnis (12) dichtend an diesem anliegt und in Richtung auf das erste Ende (16) des Aufnahmeraums (14) gleitend verschiebbar ist.

3. Vorrichtung nach Anspruch 1 oder 2, **gekennzeichnet durch** einen außerhalb des Aufnahmeraums verlaufenden Auslaßkanal (24), der **durch** die Auslaßöffnung (22) mit dem Aufnahmeraum (14) verbunden ist.

4. Vorrichtung nach Anspruch 1 oder 2, **gekennzeichnet durch** ein einen Auslaßkanal aufweisendes Auslaßröhrchen (50), das in Bewegungsrichtung des mindestens einen Trennelements (30) verläuft und von außerhalb des Aufnahmeraums (14) bis in diesen hineinragt und dessen in dem Aufnahmeraum (14) angeordnetes Ende (52) die Auslaßöffnung (22) des Aufnahmeraums bildet, und daß das mindestens eine Trennelement (30) von dem Auslaßröhrchen durchstechbar ist.

5. Vorrichtung nach Anspruch 3 oder 4, **dadurch gekennzeichnet, daß** die Entlastungsöffnung (52) mit dem Auslaßkanal (24) verbunden ist.

6. Vorrichtung nach einem der Ansprüche 1 bis 5, **dadurch gekennzeichnet, daß** die Haltekraft-Erzeugungseinheit (48) als eine im Bereich der Auslaßöffnung (22) und der Entlastungsöffnung (20) die Reibung zumindest des untersten Trennelements (30) im Vergleich zum übrigen Bereich des Aufnahmeraums (14) erhöhende Einheit ausgebildet ist.

7. Vorrichtung nach Anspruch 6, **dadurch gekennzeichnet, daß** die Haltekraft-Erzeugungseinheit (48) als eine Verengung in dem Bereich des Aufnahmeraums (14) zwischen der Auslaßöffnung (22) und Entlastungsöffnung (20) ausgebildet ist.

8. Vorrichtung nach Anspruch 6, **dadurch gekennzeichnet, daß** die Haltekraft -Erzeugungseinheit (48) durch Verbreiterung des untersten Trennelements (30), das damit breiter ist als die anderen Trennelemente, ausgebildet ist.

9. Vorrichtung nach Anspruch 6, **dadurch gekennzeichnet, daß** die Reibungserhöhung durch entsprechende Ausgestaltung der sich kontaktierenden Oberflächen des untersten Trennelements (30) und des Aufnahmeraums (14) ausgebildet ist.

10. Vorrichtung nach einem der Ansprüche 1 bis 5, **dadurch gekennzeichnet, daß** die Haltekraft-Erzeugungseinheit (48) eine Feder ist, deren Federkraft entgegengesetzt zur Richtung der bei Einwirkung der druckerzeugenden Einheit entstehenden Bewegung des mindestens einen Trennelements (30) wirkt.

11. Vorrichtung zur sequentiellen Abgabe von fließfähigen Reagenzien, mit
- einer Kapillaren (12), die einen Aufnahmeraum (14) mit einem ersten (16) und einem diesem gegenüberliegenden zweiten offenen Ende (18) aufweist,
- einer druckerzeugenden Einheit (46), die am zweiten Ende (18) der Kapillare (12) positionierbar oder angeordnet ist und mit der in dem Aufnahmeraum (14) ein Druck aufbaubar ist,
- einer von dem Aufnahmeraum (14) aufgenommenen Reagenziensäule, die mindestens zwei Reagenzienvolumina (38, 40, 42) aufweist, welche von einem Gasvolumen oder einem Volumen mit einer hydrophoben, gegenüber den Reagenzien inerten und mit diesen im wesentlichen nicht vermischbaren Flüssigkeit (58, 60) getrennt sind,
- einer in der Kapillare (12) ausgebildeten Auslaßöffnung (22), die zwischen den beiden offenen Enden (16, 18) angeordnet ist und eine hydrophile Membran (54) aufweist,
- einem in der Kapillare gleitend verschiebbaren Verschlußelement (56), das vor Einwirkung der druckerzeugenden Einheit (46) zwischen dem zweiten Ende (18) der Kapillare und der Auslaßöffnung (22) angeordnet und in Folge von durch die druckerzeugende Einheit (46) aufgebauten Druck an der Auslaßöffnung (22) vorbei in Richtung auf das erste Ende (16) der Kapillare verschiebbar ist, und
- einer im Bereich zwischen der Auslaßöffnung (22) und dem ersten Ende (16) der Kapillare angeordneten Haltekraft-Erzeugungseinheit zur Erzeugung einer auf das Verschlußelement (56) wirkenden Haltekraft, die so groß ist, daß sich in diesem Bereich der Kapillare ein größerer Strömungswiderstand für die Reagenzien einstellt, als derjenige, der sich ergibt, wenn die Reagenzien durch die Auslaßöffnung (22) und durch die Membran (54) abfließen.

## Claims

1. A device (10) for sequentially discharging flowable reagents, comprising:
- a receptacle (12) comprising a receiving chamber (14) with two opposite ends, the receptacle (12) having a relief opening (20) at the first end (16) of the receiving chamber,
- a pressure generating unit (46) adapted to be positioned or arranged at the receptacle (12) at the second end (18) of the receiving chamber (14), and adapted to build pressure in the receiving chamber (14),
- a reagent column contained in the receiving chamber (14), comprising at least two reagent volumes (38, 40, 42, 44) separated by a respective partition element (30, 32, 34, 36), each partition element (30, 32, 34, 36) abutting the inside of the receptacle (12) in a sealing manner and being slidable into the receiving chamber (14) towards the first end (16) thereof,
- an outlet opening (22) arranged at a branch between the first (16) and the second end (18) of the receiving chamber (14), the distance between the outlet opening (22) and the relief opening (20)of the receiving chamber (14) being at least as great as the thickness of the first partition element (32) between the outlet opening (22) and the second end (18) of the receiving chamber (14),
- a holding force generating unit (48) arranged in the region between the outlet opening (22) and the relief opening (20) in the receiving chamber (14), for generating a holding force acting at least on the partition elements (30) within this region of the receiving chamber (14), which is great enough to cause a high flow resistance to the reagents in this region that is higher than the resistance occurring when the reagents flow out from the outlet opening (22).

2. The device of claim 1, wherein the pressure generating unit (46) comprises a plunger abutting the inside of the receptacle (12) in a sealing manner and being slidable towards the first end (16) of the receiving chamber (14).

3. The device of claim 1 or 2, wherein an outlet channel (24) is provided extending outside the receiving chamber (14) and being connected to the receiving chamber (14) through the outlet opening (22).

4. The device of claim 1 or 2, wherein an outlet tubule (50) having an outlet channel is provided, which extends in the direction of movement of the at least one partition element (30) and extends from outside the receiving chamber (14) into the same, and whose end (52) located in the receiving chamber (14) forms the outlet opening (22) of the receiving chamber (14), and wherein the at least one partition element (30) can be pierced by the outlet tubule.

5. The device of claim 2 or 3, wherein the relief opening (52) is communicated with the outlet channel (24).

6. The device of one of claims 1 to 5, wherein the holding force generating unit (48) is a unit increasing the friction of at least the lowermost partition element (30) in the area of the outlet opening (22) and the relief opening (20) as compared to the remainder of the receiving chamber (14).

7. The device of claim 6, wherein the holding force generating unit (48) is a constriction in the portion of the receiving chamber (14) between the outlet opening (22) and the relief opening (20).

8. The device of claim 6, wherein the holding force generating unit (48) is an enlargement of the lowermost partition element (30) making the same wider than the other partition elements.

9. The device of claim 6, wherein the increase in friction is obtained by a corresponding structure of the contacting surfaces of the lowermost partition element (30) and the receiving chamber (14).

10. The device of one of claims 1 to 5, wherein the holding force generating unit (48) is a spring whose resilience acts opposite to the direction of movement of the at least one partition element (30) when the pressure generating unit acts thereupon.

11. A device for sequentially discharging flowable reagents, comprising:
- a capillary (12) comprising a receiving chamber (14) with a first (16) and an opposite second open end (18),
- a pressure generating unit (46) adapted to be positioned or arranged at the second end (18) ofthe capillary (12), and adapted to build pressure in the receiving chamber (14),
- a reagent column contained in the receiving chamber (14), comprising at least two reagent volumes (38, 40, 42) separated by a gas volume or a volume with a hydrophobic liquid (58, 60) inert to the reagents and substantially immiscible with these,
- an outlet opening (22) arranged in the capillary (12) between the two open ends (16, 18) and comprising a hydrophilic membrane (54),
- a closure member (56) slidable in the capillary and, prior to being subjected to the effect of the pressure generating unit (46), located between the second end (18) of the capillary and the outlet opening (22), and adapted to be slidably moved past the outlet opening (22) towards the first end (16) of the capillary due to the pressure built up by the pressure generating unit (46), and
- a holding force generating unit (48) arranged in the region between the outlet opening (22) and the first end (16) ofthe capillary, for generating a holding force acting on the closure member (56), which is great enough to cause a high flow resistance to the reagents in this region of the capillary that is higher than the resistance occurring when the reagents flow out from the outlet opening (22) and the membrane (54).

## Revendications

1. Dispositif (10) de distribution séquentielle de réactifs à écoulement libre, ayant
- un récipient de réception (12) qui présente une chambre de réception (14) avec deux extrémités situées face à face, dans lequel le récipient de réception (12) présente à la première extrémité (16) de la chambre de réception une ouverture de décharge (20),
- une unité de mise en pression (46) qui est positionnable ou disposée sur le récipient de réception (12) à la deuxième extrémité (18) de la chambre de réception et avec laquelle on peut produire une pression dans la chambre de réception (14),
- une colonne de réactifs reçus par la chambre de réception (14), qui présente au moins deux volumes de réactifs (38, 40, 42, 44) séparés respectivement par un élément de séparation (30, 32, 34, 36), dans laquelle chaque élément de séparation (30, 32, 34, 36) est placé de manière étanche dans le récipient de réception (12) et est déplaçable par glissement dans la chambre de réception (14) en direction de sa première extrémité (16),
- une ouverture d'évacuation (22), qui est disposée à une bifurcation entre la première (16) et la deuxième extrémité (18) de la chambre de réception (14), dans laquelle l'écartement entre l'ouverture d'évacuation (22) et l'ouverture de décharge (20) de la chambre de réception (14) est au moins aussi grande que l'épaisseur du premier élément de séparation (32) disposé entre l'ouverture d'évacuation (22) et la deuxième extrémité (18) de la chambre de réception,
- une unité de production d'une force de retenue (48) disposée dans la zone entre l'ouverture d'évacuation (22) et l'ouverture de décharge (20) dans la chambre de réception (14) pour produire une force de retenue agissant au moins sur les plus bas des éléments de séparation (20) disposés dans cette zone de la chambre de réception (14), qui est si importante qu'elle s'ajuste dans cette zone à une plus grande résistance à l'écoulement pour les réactifs que celle qui s'établit par l'ouverture de sortie (22), lorsque les réactifs s'écoulent par l'ouverture de sortie (22).

2. Dispositif selon la revendication 1, **caractérisé en ce que** l'unité produisant de la pression (47) présente un flacon, qui est relié de manière étanche à celui-ci dans le récipient de réception (12) et est déplaçable par glissement dans la direction de la première extrémité (16) de chambre de réception (14).

3. Dispositif selon la revendication 1 ou 2, **caractérisé par** un canal d'évacuation (24) se trouvant à l'extérieur de la chambre de réception (14), qui est relié à la chambre de réception par l'ouverture d'évacuation (22).

4. Dispositif selon la revendication 1 ou 2, **caractérisé par** un tuyau d'évacuation (50) présentant un canal d'évacuation qui se trouve dans la direction du mouvement du au moins un élément de séparation (30) et qui pénètre de l'extérieur de la chambre de réception (14) jusque dans celui-ci et dont l'extrémité (52) disposée dans la chambre de réception (14) forme l'ouverture d'évacuation (22) de la chambre de réception, et en ce que le au moins un élément de séparation (30) peut être traversé par le tuyau d'évacuation.

5. Dispositif selon la revendication 3 ou 4, **caractérisé en ce que** l'ouverture d'évacuation (52) est reliée au canal d'évacuation (24).

6. Dispositif selon l'une des revendications 1 à 5, **caractérisé en ce que** l'unité de production d'une force de retenue (48) est constituée comme une unité augmentant le frottement dans la zone de l'ouverture d'évacuation (22) et de l'ouverture de décharge (26) au moins de l'élément de séparation (30) le plus bas en comparaison avec le reste de la zone de la chambre de réception (14).

7. Dispositif selon la revendication 6, **caractérisé en ce que** l'unité de production d'une force de retenue (48) est formée d'un rétrécissement dans la zone de la chambre de réception (14) entre l'ouverture d'évacuation (22) et l'ouverture de décharge (20).

8. Dispositif selon la revendication 6, **caractérisé en ce que** l'unité de production d'une force de retenue (48) est constituée par un élargissement de l'élément de séparation le plus bas (30), qui est par conséquent plus large que les autres éléments de séparation.

9. Dispositif selon la revendication 6, **caractérisé en ce que** l'augmentation du frottement est constituée par une forme de réalisation correspondante aux surfaces en contact de l'élément de séparation le plus bas (30) et de la chambre de réception (14).

10. Dispositif selon l'une des revendications 1 à 5, **caractérisé en ce que** l'unité de production d'une force de retenue (48) est un ressort, dont l'élasticité agit en sens contraire par rapport à la direction du mouvement, produit par l'effet de l'unité do mise en pression, du au moins un élément de séparation (30).

11. Dispositif de distribution séquentielle réactifs à écoulement libre, ayant
- un capillaire (12) qui présente une chambre de réception (14) avec une première et une deuxième extrémité (18) ouverte se trouvant en face de la première,
- une unité de mise en pression (46) qui est positionnable ou disposée à la deuxième extrémité (18) du capillaire (12) eL avec laquelle on peut produire une pression dans la chambre de réception (14),
- une colonne de réactifs reçus par la chambre de réception (14), qui présente au moins deux volumes de réactifs (38, 40, 42, 44) qui sont séparés par un volume de gaz ou un volume avec un liquide (50, 60) hydrophobe, inerte vis à vis des réactifs et essentiellement non miscible avec ceux-ci,
- une ouverture d'évacuation (22) formée dans le capillaire (12), qui est disposée entre les deux extrémités ouvertes (16, 18) et présente une membrane hydrophile (54),
- un élément d'obturation (56) pouvant être déplacé par glissement dans le capillaire, qui est disposé avant la mise en oeuvre de l'unité de mise en pression (46) entre la deuxième extrémité (18) du capillaire et l'ouverture d'évacuation (22) et, à la suite de la pression installée au moyen de l'unité de mise en pression (46), peut être déplacé en direction de la première extrémité (16) du capillaire, et
- une unité de production d'une force de retenue (48) disposée dans la zone entre l'ouverture d'évacuation (22) et la première extrémité (16) du capillaire pour produire une force de retenue agissant au moins sur l'élément d'obturation (56), qui est si importante qu'elle s'ajuste dans cette zone du capillaire à une plus grande résistance à l'écoulement pour les réactifs que celle qui s'établit lorsque les réactifs s'écoulent par l'ouverture de sortie (22) et à travers la membrane (54).
